# EUROPEAN PATENT SPECIFICATION

(11) **EP 0 618 212 B1**
(45) Date of publication and mention of the grant of the patent: **12.12.2001**
(21) Application number: 93105120.5
(22) Date of filing: 29.03.1993
(51) Int. Cl.: C07F 9/38

(54) **Process for producing N-phosphonomethyliminodiacetic acid**
Verfahren zur Herstellung von N-Phosphonomethyliminodiessigsäure
Procédé de préparation de l'acide N-phosphonométhyliminodiacétique

(43) Date of publication of application: 05.10.1994
(73) Proprietor: FINCHIMICA S.p.A., 25025 Manerbio (Brescia) (IT)
(72) Inventor: Donadello, Graziello, I-36078 Valdagno (Vicenza) (IT)
(74) Representative: Rambelli, Paolo

(56) References cited:
- EP-A- 0 155 926
- FR-A- 2 626 884

## Description

The present invention relates to an improved process for preparing N-phosphono-methyl-iminodiacetic acid (PMIDA), also known as N,N-diacetic iminomethylene phosphonic acid.

As is known, a compound of this type is an important intermediate in the preparation of N-phosphonomethyl glycine, a broad spectrum herbicide.

More particularly, the invention relates to a process for preparing PMIDA by means of phosphonomethylation of iminodiacetic acid (IDA) which is performed by reacting an aqueous solution of phosphorous acid and a strong mineral acid, in particular hydrochloric acid, with iminodiacetic acid and formaldehyde.

Patents US 3 288 846 and US 3 455 675 describe a process of phosphonomethylation of IDA performed by preparing IDA hydrochloride to which there are added further hydrochloric acid and phosphorous acid and then formaldehyde.

EP-A-0 155 926 describes an energy saving process for preparing PMIDA by reacting an alkali metal salt of iminodiacetic acid in aqueous strong mineral acid solution with phosphorous acid and formaldehyde and then adding sufficient water to dissolve the alkali metal salt formed during the reaction.

FR-A-2 626 884 describes a process, wherein PMIDA and a carboxylic acid chloride are prepared simultaneously by reacting phosphorous-trichloride and C₁₋₄ carboxylic acid in a molar ratio of 1:3, separating the phosphorous acidic phase formed from the carboxylic acid chloride which is isolated, reacting the phosphorous acidic phase containing carboxylic acid and carboxylic acid chloride after dilution with water with iminodiacetic acid and an aqueous solution of formaldehyde, in the presence of an added strong mineral acid, preferably hydrochloric acid, at a temperature between 60-120°C, and evaporating the mixture until the separation of crystals.

Patent IT-1 118 553 describes an alternative process, in which there is used as the phosphorous source phosphorous trichloride which is hydrolysed in water to give a solution in which the reaction products, phosphorous acid and hydrochloric acid, are in a stoichiometric molar ratio of the hydrolysis reaction of 1:3. The solution obtained in this way is then made to react with iminodiacetic acid and then formaldehyde.

Although phosphorous trichloride is an economic source of phosphorous, it has been established that the hydrolysis in water of phosphorous trichloride, which is an extremely exothermic reaction, is difficult to control and easily leads to by-products, particularly to products of oxidation of the phosphorous acid.

Furthermore, the large amount of hydrochloric acid present in the phosphonomethylation product renders the recovery of PMIDA complicated an expensive, requires a high consumption of energy, does not enable commercial hydrochloric acid to be recovered by distillation, since the latter is highly contaminated by formaldehyde, and gives rise to a considerable quantity of liquid refluents which are very expensive to process.

The object of the present invention is to provide an improved process, which is easier and more economic with respect to the known processes.

This and other objects are achieved in a process for preparing N-phosphono-methyl-imino-diacetic acid characterised in that:
a) phosphorus trichloride is hydrolysed with a concentrated aqueous solution of hydrochloric acid, the reaction temperature and amount of water are regulated such that an aqueous solution of hydrochloric acid and phosphorous acid in a molar ratio of 0.5:1 to 2:1 is formed, and gaseous hydrochloric acid is caused to develop from the reaction medium;
b) the phosphonomethylation reaction is performed in the solution obtained in a) in the presence of iminodiacetic acid in a molar ratio of IDA / H₃PO₃ of between 1:1 and 1:1.2 and with the addition of formaldehyde; and
c) N-phosphono-methyl-imino-diacetic acid is recovered from the reaction medium.

In the preferred embodiment of the process according to the invention, in stage a) the phosphorus trichloride hydrolysis reaction is performed using concentrated hydrochloric acid having a concentration of 30-38% so as to obtain an aqueous solution having a hydrochloric acid phosphorous acid molar ratio of between 0.7:1 and 1.5:1, preferably between 0.9:1 and 1.1:1, at a hydrolysis temperature of between 30 and 70° and preferably of between 40 and 50°C. As hydrolysis is performed in concentrated hydrochloric acid, the reaction is practically heatless and the Cl⁻ ions present from the beginning inter alia prevent the oxidation of the phosphorous acid which it is desired to obtain.

Further advantages and characteristics of the process according to the invention will result from the following detailed description provided with reference to the appended Figures and given by way of non-limiting example, in which:
- Figure 1 is a flow chart of the process for producing PMIDA using IDA; and
- Figure 2 is a flow chart of the process according to the invention for producing PMIDA from iminodiacetonitrile (IDAN).

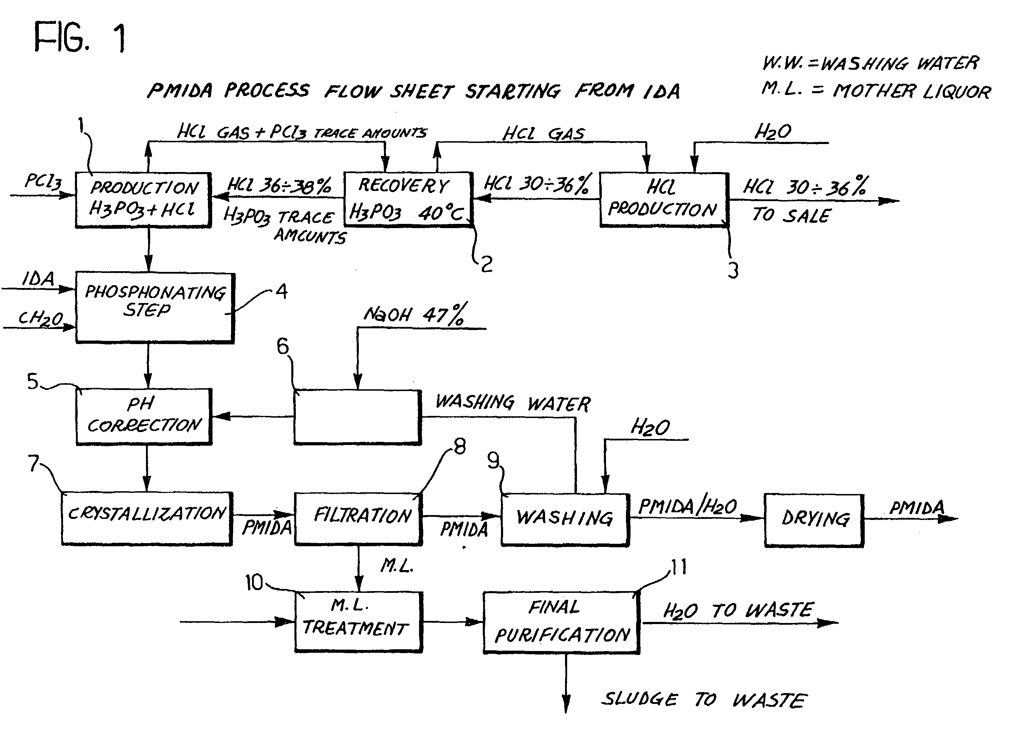

In Figure 1, 1 indicates a phosphorus trichloride hydrolysis stage in which the trichloride is hydrolysed by the addition of an aqueous solution of concentrated hydrochloric acid having a concentration of 30-38% by weight and preferably of 36 - 38% by weight obtained from a phosphorous acid recovery stage, indicated 2. The hydrolysis reaction is performed in such a way that gaseous hydrochloric acid, possibly including traces of phosphorus trichloride, develops and so as to obtain a solution of hydrochloric acid and phosphorous acid in which the molar ratio of the two acids is within the limits stated above.

The flow of gaseous hydrochloric acid and possible traces of phosphorus trichloride passes to stage 2 for the recovery of the phosphorous acid, which is performed by absorption in concentrated hydrochloric acid at a temperature which is typically not greater than 40°C. From stage 2, the gaseous effluent consisting of hydrochloric acid is fed to a stage 3 for the production of hydrochloric acid, advantageously producing a concentrated hydrochloric acid solution having a concentration which can be adjusted as desired from 30 to 36% by weight and which can be put to direct commercial use since it is not contaminated with undesirable impurities.

The solution of phosphorous acid and hydrochloric acid in the above molar ratios is used as it is, in the phosphonomethylation stage, bearing the reference numeral 4 in the Figure, in which phosphonisation is performed by the addition of IDA and formaldehyde at a temperature which is typically between 90 and 120°C. As is known, in order to improve the output, it is preferable to perform the phosphonomethylation reaction using a slight stoichiometric excess of formaldehyde and prophorous acid relative to the molar concentrations of IDA. Therefore generally, with reference to 1 mole of IDA used in the phosphonisation stage, between 1 and 1.2 moles of phosphorus trichloride are used during the phosphorus trichloride hydrolysis stage. The formaldehyde is preferably used in a stoichiometric excess of between 1 and 1.2 and preferably 1.15 moles of formaldehyde per mole of IDA.

The iminodiacetic acid used in the phosphonomethylation stage can be prepared by means of known methods, for example by means of basic hydrolysis of iminodiacetonitrile (IDAN) and acidification of the hydrolysis product with strong mineral acid and crystallisation of the IDA recovered by filtration, as is described for example in the patent GB 1 575 569.

In order to recover the required PMIDA compound from the phosphonomethylisation medium, a pH correction operation is performed, indicated as stage 5 in Figure 1, by the addition to the reaction medium of dilute sodium hydroxide obtained for example from a stage 6 in which the sodium hydroxide typically concentrated to 47% is diluted with the washing waters of the crystallised product. The amount of dilute sodium hydroxide used is such that the pH is brought to a value of approximately 2 and more precisely close to the isoelectric point of minimum solubility of the N-phosphono-methyl-imino-diacetic acid. The amount of sodium hydroxide used is approximately such that the hydrochloric acid present in the reaction mixture is completely neutralised, it not being possible for the latter hydrochloric acid to be distilled since it forms a maximum boiling azeotrope with the water and, when concentrated, forms salts with the PMIDA itself. By means of the process according to the invention, the amount of sodium hydroxide solution is reduced to the minimum. In addition, the losses of PMIDA in the mother liquor are minimal.

When the pH has been corrected, the desired product crystallises in a crystallisation stage 7 at a temperature of between 8 and 30°C and the product of crystallisation is filtered in 8 and washed in 9.

The mother liquors of filtration are sent to a purification treatment indicated 10 and 11.

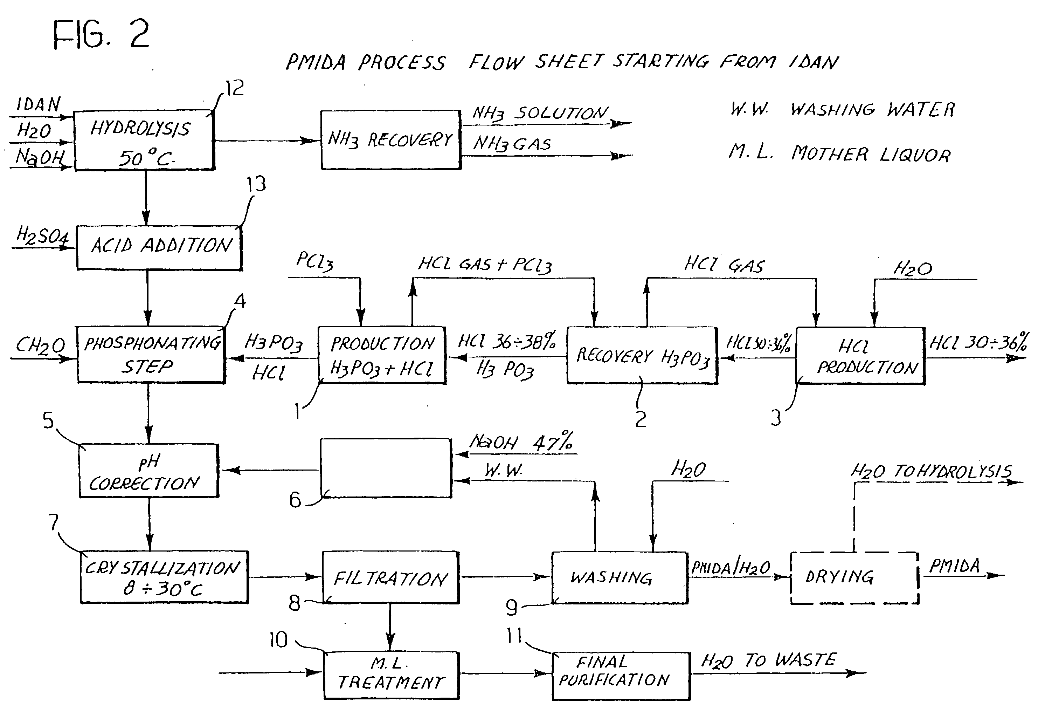

In the flow chart of Figure 2, operations similar to those described with reference to Figure 1 are indicated in the Figure with the same reference numerals. The process diagram in Figure 2 differs from that in Figure 1 by the use of iminodiacetonitrile (IDAN) as the IDA source. To this end, in a stage indicated 12 in the Figure, IDAN is subjected to basic hydrolysis with an aqueous solution having an alkaline base, particularly sodium hydroxide, at a temperature generally of between 25° and 50°C in order to form the alkali metal salt, particularly the sodium salt, of IDA. When the IDAN is hydrolysed, ammonia is developed and recovered in an absorption stage 14 with the production of an aqueous ammonia solution and/or gaseous ammonia. In a following stage 13 a strong mineral acid is added to the IDAN hydrolysis product in order to form the strong acid salt of IDA. The acidification product is then subjected to phosphonomethylation using the phosphorous acid and hydrochloric acid solution prepared in stage 1 as described above. Advantageously, in this variant of the process, the strong mineral acid used in the acidification stage 13 consists of sulphuric acid as a result of which the reaction mixture added to the product of hydrolysis of the phosphorus trichloride prepared in 1 comprises sodium sulphate.

As a result of the above description, the process according to the invention comprises substantial advantages, for example:
- it simplifies isolation of the products;
- it saves energy inter alia as a result of eliminating the concentration of the reaction mass;
- it increases the specific productivity of the equipment in terms of quantities produced with respect to the reaction volume used;
- it uses scarcely one third of the hydrochloric acid generated by the phosphorous trichloride and with the remaining two thirds produces an industrial standard hydrochloric acid;
- it significantly reduces the amount of refluents and their solubility and hence the relative disposal costs in terms of apparatus and treatment;
- it reduces the loss of product which is due to its solubility in water;
- it reduces the overall consumption of reagents.

It is understood that, although the process according to the invention has been described with reference to operations performed in stages, the process could also be performed discontinuously or continuously according to the procedures known to the persons skilled in the art.

### Example 1

A 250 ml flask provided with agitators, a thermometer, a charging funnel and refrigerant which drips down is immersed in a thermostatic bath.

The flask is charged with a solution from a first absorber and obtained from a preceding test of 230 g which when analysed proved to contain 1.3% H₃PO₃ and 37% HCl.

The solution is heated to 40°C and within approximately 2 hours 151.5 g of phosphorus trichloride are added. The gases which develop are absorbed in an absorber (first absorber) also maintained at 40°C and containing 210 g of HCl with a concentration of 32.3%. Finally, the gases which develop from the first absorber are absorbed in 290 g of water whilst the temperature is maintained at 20°C, producing a 32.4% hydrochloric acid solution of high purity not contaminated with phosphorous acid.

When PCl₃ has been added, the flask weighs 221 g and contains 40.8% H₃PO₃ and 22.2% HCl. This liquid is transferred to a flask which is approximately 750 ml in size and is provided with agitators, a thermometer and a charging funnel. 133.5 g iminodiacetic acid are added to the flask and the mixture is heated to 90°C. When the temperature has been reached, 75 g of formaldehyde solution 45% by weight are added within 60 minutes; when the formaldehyde solution has been added, the mixture is refluxed for 3 hours.

The mixture is then cooled to 40°C and 260 g of a 20% sodium hydroxide solution obtained from 47% sodium hydroxide and the washing waters of a previous operation are added.

The mixture is agitated at 50°C until a stable pH is attained and then cooled to ambient temperature and left to crystallise. Filtration is then performed. The filtration liquors are then passed to a processing reactor which renders them suitable for discharge. The product on the filter is washed with water and the washing water is preserved in order to be used in the dilution of the caustic soda for a following test. The product on the filter is dried, producing 210 g of phosphonomethyliminodiacetic acid with 97% purity.

## Claims

1. A process for preparing N-phosphono-methyl-imino-diacetic acid by means of phosphonomethylation of iminodiacetic acid by the reaction of an aqueous solution of phosphorous acid and hydrochloric acid, obtained from the hydrolysis of phosphorus trichloride, with iminodiacetic acid and formaldehyde, **characterised in that**:
a) the phosphorus trichloride is hydrolysed with a concentrated aqueous solution of hydrochloric acid, the reaction temperature and amount of water are regulated such that an aqueous solution of hydrochloric acid and phosphorous acid in a molar ratio of 0.5:1 to 2:1 is formed, and gaseous hydrochloric acid is caused to develop from the reaction medium;
b) the phosphonomethylation reaction is performed in the solution obtained in a) in the presence of iminodiacetic acid in a molar ratio of iminodiacetic acid to phosphorous acid of between 1:1 and 1:1.2 and with the addition of formaldehyde; and
c) N-phosphono-methyl-imino-diacetic acid is recovered from the reaction medium.

2. A process according to Claim 1, in which the iminodiacetic acid in the phosphonomethylation reaction b) is obtained by the basic hydrolysis of iminodiacetonitrile with an aqueous solution of sodium hydroxide and acidification with sulphuric acid in order to obtain sodium sulphate and IDA, and in which the reaction product obtained in this manner is used as an IDA source in the phosphonomethylation stage.

3. A process according to Claim 1 or Claim 2, in which, in stage a), there is obtained an aqueous solution having an hydrochloric acid/phosphorous acid molar ratio of between 0.7:1 and 1.5:1, preferably of between 0.9:1 and 1.1:1 and in which the hydrolysis temperature is between 30 and 70°C and preferably between 40 and 50°C.

4. A process according to any one of the preceding claims, in which the N-phosphono-methyl-imino-diacetic acid is recovered by the addition to the phosphono methylation product of an aqueous solution of caustic soda and water for washing the product in order to cause the crystallisation of the N-phosphono-methyl-imino-diacetic acid.

5. A process according to any one of the preceding claims in which the gaseous hydrochloric acid developed in the phosphorus trichloride hydrolysis stage is absorbed in concentrated hydrochloric acid.

6. A process according to any one of the preceding claims, in which the trichloride hydrolysis stage is performed by the addition of hydrochloric acid concentrated to between 30 and 38% by weight.

## Patentansprüche

1. Verfahren zur Herstellung von N-Phosphonmethyl-Iminoacetessigsäure durch die Phosphonomethylierung von Iminoacetessigsäure mittels Reaktion einer wässrigen Lösung von Phosphonsäure und Chlorwasserstoffsäure, gewonnen aus der Hydrolyse von Phosphortrichlorid, mit Iminoacetessigsäure und Formaldehyd, **dadurch gekennzeichnet, dass**:
a) das Phosphortrichlorid mit einer konzentrierten wässrigen Lösung von Chlorwasserstoffsäure hydrolysiert wird, die Reaktionstemperatur und die Wassermenge so geregelt werden, dass eine wässrige Lösung von Chlorwasserstoffsäure und Phosphonsäure in einem Molverhältnis von 0.5:1 bis 2:1 gebildet wird, und die Entwicklung gasförmiger Chlorwasserstoffsäure aus dem Reaktionsmedium ausgelöst wird;
b) die Phosphonomethylierungsreaktion in der unter a) gewonnenen Lösung in Anwesenheit von Iminoacetessigsäure in einem Molverhältnis von Iminoacetessigsäure zu Phosphonsäure zwischen 1:1 und 1:1.2 und unter Hinzufügung von Formaldehyd ausgeführt wird; und
c) aus dem Reaktionsmedium N-Phosphonmethyl-Iminoacetessigsäure gewonnen wird.

2. Verfahren nach Anspruch 1, bei dem die Iminoacetessigsäure in der Phosphonomethylierungsreaktion b) durch die Basehydrolyse von Iminodiacetonitril mit einer wässrigen Lösung von Natriumhydroxid und der Ansäuerung mit Schwefelsäure gewonnen wird, um Natriumsulfat und IDA zu erhalten, und bei dem das auf diese Weise gewonnene Reaktionsprodukt als IDA-Quelle in der Phosphonomethylierungsphase verwendet wird.

3. Verfahren nach Anspruch 1 oder Anspruch 2, in dem in Phase
a) eine wässrige Lösung mit einem Molverhältnis Chlorwasserstoffsäure/Phosphonsäure zwischen 0.7:1 und 1.5:1 gewonnen wird, vorzugsweise zwischen 0.9:1 und 1.1:1, und in dem die Hydrolysetemperätur zwischen 30 und 70°C liegt, vorzugsweise zwischen 40 und 50°C.

4. Verfahren nach einem der voranstehenden Ansprüche, in dem die N-Phosphonmethyl-Iminoacetessigsäure durch Hinzufügung einer wässrigen Lösung von Ätznatron und Wasser zum Waschen des Produkts zum Phosphonmethylierungsprodukt gewonnen wird, um die Kristallisierung der N-Phosphonmethyl-Iminoacetessigsäure auszulösen.

5. Verfahren nach einem der voranstehenden Ansprüche, in dem die gasförmige Chlorwasserstoffsäure, die in der Phase der Hydrolyse von Phosphortrichlorid entwickelt wurde, in konzentrierter Chlorwasserstoffsäure absorbiert wird.

6. Verfahren nach einem der voranstehenden Ansprüche, in dem die Phase der Trichloridhydrolyse durch Hinzufügung von Chlorwasserstoffsäure durchgeführt wird, die auf 30 bis 38 Gewichtsprozent konzentriert wurde.

## Revendications

1. Procédé de préparation d'acide N-phosphonométhyl-imino-diacétique par phosphonométhylation d'acide iminodiacétique par réaction d'une solution aqueuse d'acide phosphoreux et d'acide chlorhydrique, obtenu par l'hydrolyse de trichlorure de phosphore, avec de l'acide iminodiacétique et du formaldéhyde, **caractérisé en ce que** :
a) le trichlorure de phosphore est hydrolysé avec une solution aqueuse concentrée d'acide chlorhydrique, la température de réaction et la quantité d'eau sont ajustées de façon à former une solution aqueuse d'acide chlorhydrique et d'acide phosphoreux dans un rapport molaire de 0,5:1 à 2:1, et l'on provoque le dégagement d'acide chlorhydrique gazeux à partir du milieu réactionnel;
b) la réaction de phosphonométhylation est mise en oeuvre dans la solution obtenue sous a) en présence d'acide iminodiacétique dans un rapport molaire de l'acide iminodiacétique à l'acide phosphoreux compris entre 1:1 et 1:1,2 et avec l'addition de formaldéhyde; et
c) de l'acide N-phosphonométhyl-iminodiacétique est récupéré à partir du milieu réactionnel.

2. Procédé selon la revendication 1, dans lequel l'acide iminodiacétique dans la réaction de phosphonométhylation b) est obtenu par hydrolyse basique d'iminodiacétonitrile avec une solution aqueuse d'hydroxyde de sodium et acidification par de l'acide sulfurique dans le but d'obtenir du sulfate de sodium et de l'acide iminodiacétique et dans lequel le produit réactionnel obtenu de la sorte est utilisé comme source d'acide iminodiacétique dans l'étape de phosphonométhylation.

3. Procédé selon la revendication 1 ou la revendication 2, dans lequel, à l'étape a), on obtient une solution aqueuse ayant un rapport molaire acide chlorhydrique/acide phosphoreux compris entre 0,7:1 et 1,5:1, de préférence entre 0,9:1 et 1,1:1 et dans lequel la température d'hydrolyse est comprise entre 30 et 70°C et de préférence entre 40 et 50°C.

4. Procédé selon l'une quelconque des revendications précédentes, dans lequel l'acide N-phosphonométhyl-iminodiacétique est récupéré par addition au produit de la phosphonométhylation d'une solution aqueuse de soude caustique et d'eau pour laver le produit afin de provoquer la cristallisation de l'acide N-phosphonométhyl-iminodiacétique.

5. Procédé selon l'une quelconque des revendications précédentes, dans lequel l'acide chlorhydrique gazeux dégagé à l'étape de l'hydrolyse par le trichlorure de phosphore est absorbé dans de l'acide chlorhydrique concentré.

6. Procédé selon l'une quelconque des revendications précédentes, dans lequel l'étape d'hydrolyse par le trichlorure est réalisée par addition d'acide chlorhydrique concentré à entre 30 et 38% en poids.
